# EUROPÄISCHE PATENTSCHRIFT

(11) **EP 0 999 915 B1**
(45) Veröffentlichungstag und Bekanntmachung des Hinweises auf die Patenterteilung: **12.12.2001**
(21) Anmeldenummer: 98936345.2
(22) Anmeldetag: 15.06.1998
(51) Int. Cl.: B23Q 1/01, B23Q 1/26, F16C 29/08

(54) **ANORDNUNG EINER FÜHRUNGSSCHIENE AN EINEM MASCHINENGESTELL**
ARRANGEMENT OF A GUIDE RAIL ON A MACHINE FRAME
AGENCEMENT D'UN RAIL DE GUIDAGE SUR UN BATI DE MACHINE

(30) Priorität: 31.07.1997 DE 19733025
(43) Veröffentlichungstag der Anmeldung: 17.05.2000
(73) Patentinhaber: INA Wälzlager Schaeffler oHG, 91072 Herzogenaurach (DE)
(72) Erfinder: EDER, Jean-Marie, F-67360 Woerth (FR)
(86) Internationale Anmeldenummer: EP9803598
(87) Internationale Veröffentlichungsnummer: WO9906177

(56) Entgegenhaltungen:
- EP-A- 0 311 895
- DD-A- 237 805
- DE-A- 3 046 590
- GB-A- 1 497 693
- US-A- 3 523 851
- US-A- 5 184 928

## Beschreibung

### Gebiet der Erfindung

Die Erfindung betrifft eine Anordnung einer Führungsschiene an einem Maschinengestell mit mehreren in der Führungsschiene eingearbeiteten durchgehenden Bohrungen, wobei zur lösbaren Befestigung der Führungsschiene an dem Maschinengestell jede Bohrung eine Befestigungsschraube enthält und auf einem Teil ihrer Länge als Senkloch mit gegenüber dem Durchmesser der Bohrung größerem innendurchmesser ausgebildet und ferner das Senkloch durch einen eingesteckten zylindrischen Stopfen nach außen verschlossen ist.

### Hintergrund der Erfindung

Führungsschienen werden z. B. als Teile von Linearlagern an Werkzeugmaschinen verwendet. Sie müssen als Verschleißteile von Zeit zu Zeit ausgewechselt werden. Daher sind sie häufig mit Schrauben am Maschinengestell befestigt, die in Bohrungen der Führungsschiene angeordnet sind. Zum Verschließen der radial erweiterten Endabschnitte der Bohrungen für die Schraubenköpfe ist es bekannt, in jeden Endabschnitt einen Stopfen einzustecken, wie es beispielsweise die DE-OS 30 46 590 zeigt. Die daraus bekannte Führungsschiene weist eine durchgehende Bohrung mit einem Senkloch größeren Durchmessers auf, so daß eine kreisringförmige Kante gebildet ist, an welcher sich der Schraubenkopf einer von außen durchgesteckten Befestigungsschraube axial abstützt. Ein in das Senkloch eingesteckter zweiteiliger Verschlußstopfen wird axial von seinem ringförmigen Mantel gehalten, der sich durch thermische Ausdehnung in dem Senkloch festklemmt. Daher muß der Stopfen mit dem Mantel vor dem Einsetzen in das Senkloch stark unterkühlt werden, so daß sich hier eine aufwendige Montage ergibt.

Aus der FR-PS 25 03 007 sind Führungsschienen mit Befestigungsschrauben bekannt, die in durchgehenden Bohrungen der Führungsschienen eingesetzt sind. Diese Bohrungen sind nach außen mit Stopfen verschlossen, die aus Kunststoff bestehen können. Solche mit Kunstharz vergossenen Durchgangs-Stufenbohrungen werden, wenn es sich um eine Linearführung in einer spangebenden Metallbearbeitungsmaschine handelt, von Spänen und von Dichtlippen der Abstreifer herausgekratzt, die sich an den Führungswagen befinden. Mit der Zeit können auf diese Weise konkave Einbuchtungen im Kunststoff und damit Ablagerungsmöglichkeiten für scharfkantige Metallspäne entstehen. Es besteht die Gefahr, daß Kunststoffstopfen an ihrer Außenseite ausgekratzt werden und sich teilweise sogar aus ihrer formschlüssigen Verankerung herauslösen. Weiterhin hat Kunststoff einen anderen Reibwert als die Führungsschiene. Unterschiedliche Reibwerte führen aber zu einem starken Verschleiß der Abstreifer, auch ohne daß scharfe Kanten vorhanden sind.

### Zusammenfassung der Erfindung

Der Erfindung liegt die Aufgabe zugrunde, eine Anordnung einer Führungsschiene der eingangs genannten Art so weiterzubilden, daß sie je nach Anwendungsfall von außen oder von dem Maschienengestell aus befestigt werden kann, wobei die freiliegenden Innenräume der Durchgangs-Stufenbohrungen der Führungsschiene in einfacher Weise zuverlässig und ohne die Verursachung von Beeinträchtigungen im Langzeitbetrieb verschlossen werden können.

Diese Aufgabe wird erfindungsgemäß dadurch gelöst, daß der Stopfen ein Sackloch mit einem dem Außengewinde der Befestigungsschraube entsprechenden Innengewinde enthält, in welches die Befestigungsschraube aus dem Maschinengestell herausragend eingeschraubt ist. Der Stopfen kann in dem Senkloch der Führungsschiene durch Kleben befestigt sein. Er dient als Verbindungselement und schafft die notwendige Fixierung der Führungsschiene an dem Maschinengestell. Auf diese Weise ergibt eine große Klebefläche einen sicheren Halt des Stopfens. Wenn die Außenseite des Stopfens nach dessen Einsetzen in das Senkloch mit der Oberfläche der Führungsschiene nicht bündig ist, muß der Stopfen dort abgeschliffen werden.

Der Stopfen kann aus zwei getrennten, längs der Mittelachse des Senkloches hintereinander angeordneten und aneinander angrenzenden Stopfenteilen gebildet sein.

Die beiden Stopfenteile können aus unterschiedlichen Werkstoffen bestehen. Eines der beiden Stopfenteile kann als zylindrische Mutter ausgeführt sein. Auch in diesem Fall kann das andere Stopfenteil in dem Senkloch eingeklebt und nach dem Anziehen der Befestigungsschraube an der Außenseite mit der Führungsschienenoberfläche bündig geschliffen werden.

Wenn jeweils der Stopfen oder das mit der Oberfläche der Führungsschiene bündige äußere Stopfenteil ein metallisches Bauteil ist, sind die Reibverhältnisse längs der Führungsschiene im wesentlichen gleich. Ein ungleichmäßiger Verschleiß von Linearlager-Abstreifern wird dadurch vermieden. Ein großer Vorteil der Erfindung liegt also darin, daß die Führungsflächen nach dem Abschleifen bündig sind und keine scharfen Kanten aufweisen. Der Stopfen hat eine Doppelfunktion. Zum einen sichert er die Befestigung der Schiene. Zum anderen deckt er die freibleibenden Innenräume der Stufenbohrung oberhalb der Befestigungsschrauben ab.

### Kurze Beschreibung der Zeichnungen

Ausführungsbeispiele der Erfindung sind in den Zeichnungen dargestellt und werden im folgenden näher beschrieben. Es zeigen:
- Figur 1: eine für die erfindungsgemäße Anordnung geeignete Führungsschiene im Querschnitt, jedoch als Teil einer vorbekannten Linearführung;
- Figur 2: eine erfindungsgemäße Anordnung der Führungsschiene mit einem deren Bohrung verschließenden einstückigen Stopfen;
- Figur 3: eine weitere erfindungsgemäße Anordnung der Führungsschiene mit einem deren Bohrung verschließenden zweiteiligen Stopfen.

### Ausführliche Beschreibung der Zeichnungen

Eine für die erfindungsgemäße Anordnung geeignete Führungsschiene 1 ist mit mehreren in Abständen hintereinander angeordneten, zur Längsrichtung der Führungsschiene rechtwinkeligen Bohrungen 2 für das Einstecken von Befestigungsschrauben 3 versehen. Mit diesen Schrauben kann die Führungsschiene 1 an einem Maschinengestell 4 lösbar befestigt werden.

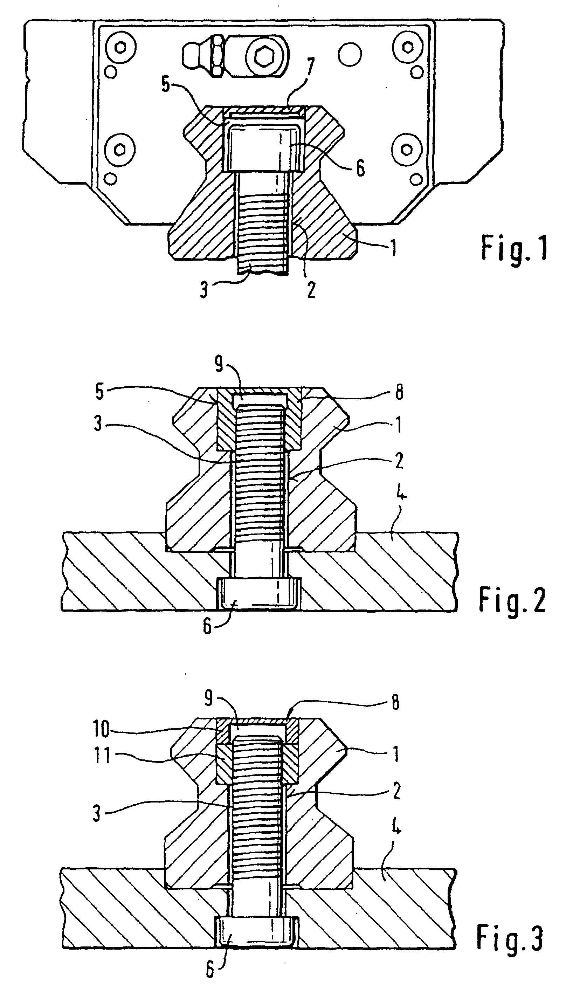

jede Bohrung 2 der Führungsschiene 1 ist an ihrem von dem Maschinengestell 4 abgewandten Ende zu einem Senkloch 5 erweitert. In diesem ist jeweils der Schraubenkopf 6 der Befestigungsschraube 3 angeordnet, wenn die Führungsschiene 1 von außen, also in Figur 1 von oben an dem Maschinengestell 4 angeschraubt wird. In diesem vorbekannten Fall wird das Senkloch 5 nach dem Einstecken der Befestigungsschraube 3 mit einem Stopfen 7, beispielsweise aus Kunststoff, verschlossen. Für die lösbare Befestigung der Führungsschiene 1 an dem Maschinengestell 4 von innen, also von unten gemäß den Figuren 2 und 3, wird die Befestigungsschraube 3 jedoch zunächst durch eine Bohrung des Maschincngestells 4 und weiter in die Bohrung 2 der Führungsschiene 1 gesteckt. Der Schraubenkopf 6 stützt sich hier axial in dem Maschinengestell 4 ab, wenn die Schraube mit ihrem Außengewinde in das Innengewinde eines erfindungsgemäßen Stopfens 8 eingeschraubt ist. Dieser weist ein Sackloch 9 und ein Innengewinde für die Befestigungsschraube 3 auf und ist in das Senkloch 5 der Führungsschiene 1 so eingesteckt, daß er mit der äußeren Oberfläche der Führungsschiene 1 bündig abschließt. Um hier eine völlig ebene Fläche ohne störende Übergänge zu erhalten, kann der Stopfen 8 abgeschliffen werden.

Die Befestigung des Stopfens 8 in dem Senkloch 5 der Führungsschiene 1 ist durch Kleben erfolgt. Axial stützt sich der Stopfen 8 an der ringförmigen Anschlagkante ab, die beim Einbringen des Senklochs 5 mit größerem Durchmesser in die Bohrung 2 mit kleinerem Durchmesser entstanden ist. Figur 2 zeigt einen einstückigen Stopfen 8 für die Führungsschiene 1.

In einer weiteren Ausführungsform kann der Stopfen 8 zweiteilig ausgeführt sein, nämlich als äußeres Stopfenteil 10 und inneres Stopfenteil 11. Beide Teile können aus unterschiedlichen Werkstoffen bestehen. Eine solche Ausführung ist in Figur 3 dargestellt. Das äußere Stopfenteil 10 schließt mit der Oberfläche der Führungsschiene 1 bündig ab und stützt sich axial an dem inneren Stopfenteil 11 ab, welches sich wiederum an der ringförmigen Kante zwischen der Bohrung 2 und dem Senkloch 5 axial abstützt. Das äußere Stopfenteil 10 ist in dem Senkloch 5 eingeklebt. Das innere Stopfenteil 11 enthält das Innengewinde zum Einschrauben der Befestigungsschraube 3, die durch die Bohrung des Maschinengestells 4 hindurch in die Bohrung 2 der Führungsschiene 1 gesteckt ist.

### Bezugszeichen

- 1: Führungsschiene
- 2: Bohrung
- 3: Befestigungsschraube
- 4: Maschinengestell
- 5: Senkloch
- 6: Schrauben kopf
- 7: Stopfen
- 8: Stopfen
- 9: Sackloch
- 10: äußeres Stopfenteil
- 11: inneres Stopfenteil

## Patentansprüche

1. Anordnung einer Führungsschiene (1) an einem Maschinengestell (4) mit mehreren in der Führungsschiene (1) eingearbeiteten durchgehenden Bohrungen (2), wobei zur lösbaren Befestigung der Führungsschiene (1) an dem Maschinengestell (4) jede Bohrung (2) eine Befestigungsschraube (3) enthält und auf einem Teil ihrer Länge als Senkloch (5) mit gegenüber dem Durchmesser der Bohrung (2) größerem Innendurchmesser ausgebildet und ferner das Senkloch (5) durch einen eingesteckten zylindrischen Stopfen (8) nach außen verschlossen ist, **dadurch gekennzeichnet, daß** der Stopfen (8) ein Sackloch (9) mit einem dem Außengewinde der Befestigungsschraube (3) entsprechenden Innengewinde enthält, in welches die Befestigungsschraube (3) aus dem Maschinengestell (4) herausragend eingeschraubt ist.

2. Anordnung nach Anspruch 1, **dadurch gekennzeichnet, daß** der Stopfen (8) in dem Senkloch (5) der Führungsschiene (1) durch Kleben befestigt ist.

3. Anordnung nach Anspruch 1, **dadurch gekennzeichnet, daß** der Stopfen (8) aus zwei getrennten, längs der Mittelachse des Senklochs (5) hintereinander angeordneten und aneinander angrenzenden Stopfenteilen (10, 1 1) gebildet ist.

4. Anordnung nach Anspruch 3, **dadurch gekennzeichnet, daß** die beiden Stopfenteile (10, 11) aus unterschiedlicfien Werkstoffen bestehen.

5. Anordnung nach Anspruch 3, **dadurch gekennzeichnet, daß** eines der beiden Stopfenteile (10, 11) als zylindrische Mutter ausgeführt ist.

## Claims

1. Arrangement of a guide rail (1) on a machine frame (4) by a plurality of through-bores (2) made in the guide rail (1), each bore (2) comprising, for detachably fixing the guide rail (1) on the machine frame (4), a fixing screw (3), said bore being configured on a part of its length as a counter-hole (5) having an inner diameter that is larger than the diameter of the bore (2), and the counter-hole (5) being closed outwardly by an inserted cylindrical stopper (8), **characterised in that** the stopper (8) comprises a pocket hole (9) having an inner thread corresponding to the outer thread of the fixing screw (3), into which outer thread, the fixing screw (3) protruding out of the machine frame (4) is screwed.

2. Arrangement according to Claim 1, **characterised in that** the stopper (8) is fixed in the counter-hole (5) of the guide rail (1) by gluing.

3. Arrangement according to Claim 1, **characterised in that** the stopper (8) is made of two separate stopper parts (10, 11) arranged behind each other and adjoining each other, along the central axis of the counter-hole (5).

4. Arrangement according to Claim 3, **characterised in that** the two stopper parts (10, 11 ) are made of different materials.

5. Arrangement according to Claim 3, **characterised in that** one of the two stopper parts (10, 11) is configured as a cylindrical nut.

## Revendications

1. Agencement d'un rail de guidage (1) sur un bâti de machine (4) au moyen d'une pluralité d'alésages (2) de passage travaillés dans le rail de guidage (1), chaque alésage (2) comportant pour la fixation détachable du rail de guidage (1) sur le bâti de machine (4), une vis de fixation (3), ledit alésage étant configuré sur une partie de sa longueur sous la forme d'un trou contrepercé (5) ayant un diamètre intérieur qui est supérieur au diamètre de l'alésage (2), ledit trou contrepercé (5) étant, en plus, fermé à l'extérieur par emboîtement d'un bouchon (8) cylindrique, **caractérisé en ce que** le bouchon (8) comporte un trou borgne (9) ayant un taraudage correspondant au filetage de la vis de fixation (3) dans lequel est vissée la vis de fixation (3) qui fait saillie du bâti de machine (4).

2. Agencement selon la revendication 1, **caractérisé en ce que** le bouchon (8) est fixé dans le trou contrepercé (5) du rail de guidage (1) par collage.

3. Agencement selon la revendication 1, **caractérisé en ce que** le bouchon (8) est fait en deux pièces de bouchon (10, 11) séparées, agencées, l'une derrière l'autre, et en contact, l'une avec l'autre, le long de l'axe central du trou contrepercé (5).

4. Agencement selon la revendication 3, **caractérisé en ce que** les deux pièces de bouchon (10, 11) sont faites en des matières différentes.

5. Agencement selon la revendication 3, **caractérisé en ce que** l'une des deux pièces de bouchon (10, 11) est configurée en forme d'un écrou cylindrique.
